# EUROPÄISCHE PATENTSCHRIFT

(11) **EP 2 002 159 B1**
(45) Veröffentlichungstag und Bekanntmachung des Hinweises auf die Patenterteilung: **03.08.2011**
(21) Anmeldenummer: 07722094.5
(22) Anmeldetag: 23.03.2007
(51) Int. Cl.: F16J 1/16, F02F 3/00

(54) **BOLZENNABEN EINES KOLBENS FÜR EINEN VERBRENNUNGSMOTOR**
PIN BOSSES OF A PISTON FOR AN INTERNAL COMBUSTION ENGINE
BOSSAGE D'AXE D'UN PISTON POUR UN MOTEUR A COMBUSTION INTERNE

(30) Priorität: 04.04.2006 DE 102006015586
(43) Veröffentlichungstag der Anmeldung: 17.12.2008
(73) Patentinhaber: MAHLE International GmbH, 70376 Stuttgart (DE)
(72) Erfinder: FEZER, Eberhard, 73635 Rudersberg-Steinenberg (DE)
(74) Vertreter: Pohle, Reinhard
(86) Internationale Anmeldenummer: PCT/DE2007/000535
(87) Internationale Veröffentlichungsnummer: WO 2007/115527

(56) Entgegenhaltungen:
- WO-A-2007/025733
- DE-A1- 2 152 462
- DE-A1- 4 111 368

## Beschreibung

Die Erfindung betrifft Bolzennaben eines Kolbens für einen Verbrennungsmotor mit je einer Bolzenbohrung zum Lagern eines kreiszylindrisch ausgebildeten Kolbenbolzens, die im Bereich der Bohrungsmitte eine Ovalität aufweist, wobei die Ovalität der Bolzenbohrung von der Bohrungsmitte ausgehend nach radial außen und nach radial innen zunimmt.

Aus der Offenlegungsschrift DE 44 41 450 A1 sind Bolzennaben eines Kolbens für einen Verbrennungsmotor bekannt, die jeweils eine Bolzenbohrung aufweisen, deren zenitseitige ebenso wie deren nadirseitige Ovalität von der Bohrungsmitte ausgehend nach radial innen zunehmen. Nachteilig ist hierbei, dass die Bohrungsmitte kreiszylindrisch ausgebildet ist, sodass die Schmierung des Kolbenbolzens im Bereich der Bohrungsmitte mangelhaft ist, und hier insbesondere beim Kaltstart die Gefahr der Beschädigung der Bolzenbohrung und des Kolbenbolzens besteht.

Aus der PCT-Anmeldung WO 2004/008006 A1 ist es bekannt, die Bolzenbohrungen der Bolzennaben radial außen mit einer zenitseitige Ovalität zu versehen. Aber weder die Bohrungsmitte noch der radial innen liegende Nadirbereich der Bolzenbohrung weisen eine ovale Querschnittsform auf, was neben Schmierungsproblemen des Kolbenbolzens im Bereich der Bohrungsmitte den weiteren Nachteil mit sich bringt, dass bei einer Zugbelastung auf den Kolbenbolzen, bei der dessen mittlerer Teil eine Verformung in kolbenbodenabgewandte Richtung erfährt, der Kolbenbolzen auf den inneren Nadirbereich der Bolzenbohrung gepresst wird, was zu einer Beschädigung dieses Bohrungsbereiches und insbesondere beim Kaltstart zu Nabenreibern führen kann.

Aus den Deutschen Offenlegungsschriften DE 2 152 462 und DE 41 11 368 A1 sind Kolben für einen Verbrennungsmotor bekannt, die Bolzenbohrungen aufweisen, die einen ovalen Querschnitt haben, wobei die kleine Halbachse der Ovalität parallel und die große Halbachse der Ovalität senkrecht zur Längsachse des Kolbens verlaufen, was bedeutet, dass die Ovalität äquatorseitig ausgebildet ist. Einer Verformung des Kolbenbolzens im Motorbetrieb sind derart ausgebildete Bolzenbohrungen nicht angepasst, was zu einer Beschädigung des Kolbenbolzens und der Bolzennaben führen kann.

Aus der internationalen Patentanmeldung WO 2007/025733 A1 ist ein Kolben mit Bolzenbohrungen bekannt, die einen ovalen Querschnitt aufweisen, wobei die Ovalität der Bolzenbohrung von der Bohrungsmitte ausgehend nach radial außen und nach radial innen zunimmt. Die Lage der Ovalität aber ist nicht eindeutig definiert, sodass auch hierbei die Gefahr der Beschädigung des Kolbenbolzens und der Bolzennaben besteht.

Die genannten Nachteile des Standes der Technik zu vermeiden, ist Aufgabe der Erfindung.

Gelöst wird die Aufgabe dadurch, dass die Bolzenbohrung im Bereich der Bohrungsmitte eine zenitseitige Längsolvalität in Richtung der Kolbenachse aufweist, dass die zenitseitige Längsolvalität in Richtung der Kolbenachse der Bolzenbohrung von der Bohrungsmitte ausgehend nach radial außen und nach radial innen und die nadirseitige Längsolvalität in Richtung der Kolbenachse der Bolzenbohrung von der Bohrungsmitte ausgehend nach radial innen zunehmen, und dass der Nadir der Bolzenbohrung einen radial außen liegenden Bereich aufweist, der im Schnitt quer zur Bolzenbohrung halbkreisförmig ausgebildet ist.

Die Form der Bolzenbohrung ist hierbei jeder temperaturbedingten und belastungsabhängigen Verformung des Kolbens und des Kolbenbolzens angepasst. Zudem verbleibt bei unbelastetem und damit unverformtem Kolbenbolzen in der Bohrungsmitte wegen der dortigen Restovalität des Zenits ein Spalt zwischen dem Kolbenbolzen und der Bolzenbohrung, in dem sich Schmieröl ansammelt, das insbesondere beim Kaltstart eine gute Schmierung des Bolzens gewährleistet.

Zweckmäßige Ausgestaltungen der Erfindung sind Gegenstand der Unteransprüche.

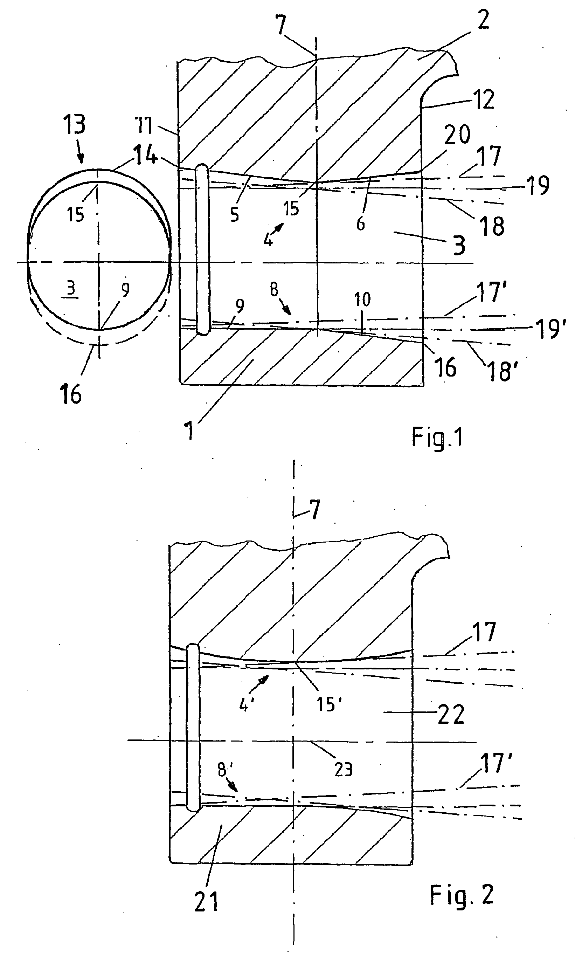

Einige Ausführungsbeispiele der Erfindung werden im Folgenden anhand der Zeichnungen beschrieben. Es zeigen
- Fig. 1: ein Ausführungsbeispiel einer Bolzennabe mit einer Bolzenbohrung im Schnitt, bei der die Ovalität des Bohrungszenits ausgehend von der Boh- rungsmitte nach radial innen und nach radial außen und zudem die Ovalität des Nadirs der Bolzenbohrung nach radial innen linear zunehmen, und
- Fig. 2: ein Ausführungsbeispiel einer Bolzennabe mit einer Bolzenbohrung im Schnitt, bei der die Ovalität des Bohrungszenits ausgehend von der Boh- rungsmitte nach radial innen und nach radial außen und zudem die Ovalität des Nadirs der Bolzenbohrung nach radial innen in der Weise zunehmen, dass sowohl der Zenit als auch der Nadir im Schnitt jeweils kurvenförmig ausgebildet sind, beziehungsweise die Form eines Polygonzuges haben.

In Fig. 1 ist das Schnittbild einer Bolzennabe 1 eines Kolbens 2 für einen Verbrennungsmotor mit einer Bolzenbohrung 3 dargestellt. Der Zenit 4 der Bolzenbohrung 3 weist einen radial außen liegenden Bereich 5 und einen radial innen liegenden Bereich 6 auf. Ausgehend von der Bohrungsmitte 7 nimmt die Ovalität des Bereiches 5 nach radial außen hin und die Ovalität des Bereiches 6 nach radial innen hin linear zu. Im Bereich der Bohrungsmitte 7 weist der Zenit 4 der Bohrung 3 eine Restovalität auf.

Der Nadir 8 der Bolzenbohrung 3 weist ausgehend von der Bohrungsmitte 7 einen radial außen liegenden Bereich 9, der in Schnitt quer zur Bolzenbohrung 3 halbkreisförmig ausgebildet ist. Zudem weist der Nadir 8 einen radial innen liegenden Bereich 10 auf, dessen Ovalität ausgehend von der Bohrungsmitte 7 nach radial innen linear zunimmt. Hierbei können die Ovalitäten der Bereiche 5, 6 und 10 der Bolzenbohrung 3 unterschiedlich stark zunehmen.

Die Ovalität der Bereiche 5, 6 und 10 der Nabenbohrung 3 ist in Fig. 1 stark vergrößert dargestellt und weist an der radial äußeren 11 und der radial inneren Stirnfläche 12 der Bolzennabe 1 gegenüber der Kreisform eine Vergrößerung der großen Achse der Ovalität von 10 µm bis 50 µm auf. Abhängig von der Art und der Größe des Kolbens kann die Vergrößerung der großen Achse der Ovalität gegenüber der Kreisform auch größer als 50 µm oder kleiner als 10 µm sein.

Mit 13 ist eine Draufsicht auf die äußere Stirnfläche 11 der Bolzennabe 1 gekennzeichnet, die die obere Kante 14 der Bolzenbohrung 3 mit maximaler Ovalität des radial außen liegenden Bereiches 5 des Zenits 4 der Bolzenbohrung 3, die Bolzenbohrung 3 im Bereich 15 der Bohrungsmitte 7 mit zenitseitiger Restovalität, den halbkreisförmigen, radial außen liegenden Nadirbereich 9 der Bolzenbohrung 3, und gestrichelt die radial innen liegende, untere Kante 16 der Bolzenbohrung 3 mit maximaler, nadirseitiger Ovalität zeigt.

Strichpunktartige ist in Fig. 1 ein in der Bolzenbohrung 3 angeordneter Kolbenbolzen eingezeichnet, dessen Verformungen bei den unterschiedlichen Belastungen des Kolbens 2 stark vergrößert dargestellt sind. So zeigen die Linien 17, 17' den bei maximaler Druckbelastung des Kolbens 2 während des Explosionstaktes verformten Kolbenbolzen, wobei die Bolzenmitte eine Verformung in Richtung Kolbenboden erfährt. Die Linien 18, 18' zeigen den Kolbenbolzen, wenn er während des Ansaugtaktes wegen der Massenträgheitskraft des Kolbens 2 einer vom Pleuel ausgehenden Zugbelastung ausgesetzt ist, sodass sich dessen Mitte in die kolbenbodenabgewandte Richtung verformt. Die Linien 19, 19' zeigen den unbelasteten Kolbenbolzen.

Die Form der Bolzenbohrung 3 ist hierbei jeder belastungsabhängigen Verformung des Kolbenbolzens angepasst. Ist der Kolbenbolzen gemäß den Linien 17, 17' wegen der beim Explosionstakt auftretenden Druckbelastung verformt, schmiegt sich der Kolbenbolzen an die von der Bohrungsmitte 7 nach radial innen zunehmende Ovalität des Zenitbereiches 6 an, wodurch verhindert wird, dass von der radial innen liegenden, zenitseitigen Kante 20 der Nabenbohrung 3 Materialspannungen ausgehen, die zusammen mit den insbesondere beim Dieselmotor sehr hohen Druckbelastungen zu einer Beschädigung des Kolbenbodens und der im Kolbenboden angeordneten Verbrennungsmulde führen können.

Bei einer Verformung des Kolbenbolzens auf Grund einer vom Pleuel ausgehenden Zugbelastung auf den Kolbenbolzen gemäß den Linien 18, 18' schmiegt sich der Kolbenbolzen an die von der Bohrungsmitte 7 aus zunehmende Ovalität des radial innen liegenden Nadirbereiches 10 an. Dadurch wird vermieden, dass hierbei vom Kolbenbolzen auf die radial innen liegende Kante 16 des Nadirbereiches der Bolzenbohrung eine Materialspannung ausgeübt wird, die zu einer Beschädigung des Innenbereiches der Bolzenbohrung führen kann. Ein direkter Kontakt zwischen Kolbenbolzen und Bolzenbohrung 3 wird hierbei aber vermieden, sodass zwischen Kolbenbolzen und Bolzenbohrung immer ein ausreichend großer Spalt bleibt, in dem sich Schmieröl ansammelt und für eine ausreichende Schmierung des Kolbenbolzens sorgt.

Die in der Bohrungsmitte 7 vorhandene Restovalität des Zenits 4 der Bolzenbohrung 3 hat den Vorteil, dass sich hier zwischen dem unbelasteten Kolbenbolzen 19, 19' und dem Zenit 4 der Bohrung 3 ein Spalt bildet, in dem sich Schmieröl ansammelt, das insbesondere beim Kaltstart eine gute Schmierung des Kolbenbolzens gewährleistet, wenn sich hierbei der Kolbenbolzen, wie mittels der Linien 17, 17' dargestellt, verformt.

Fig. 2 zeigt ein Ausführungsbeispiel der Bolzennabe 21 mit einer Bolzenbohrung 22 im Schnitt, bei der die Ovalität des Bohrungszenits 4' ausgehend von der Bohrungsmitte 7 nach radial innen und nach radial außen und zudem die Ovalität des Nadirs 8' der Bolzenbohrung 22 nach radial innen in der Weise zunehmen, dass sowohl der Zenit 4' als auch der Nadir 8' im Schnitt entlang der Bohrungsachse 23 jeweils kurvenförmig ausgebildet sind beziehungsweise die Form eines Polygonzuges haben. Hierbei können die Ovalitäten des Nadirs 8' und des Zenits 4' der Bolzenbohrung 22 unterschiedlich stark zunehmen.

Da bei hoher Druckbelastung auf den Kolben 2 im Rahmen des Explosionstaktes und bei einer Verformung des Kolbenbolzens gemäß den Linien 17, 17' der spitz zulaufende Zenitbereich 15 der Bolzenbohrung 3 gemäß Fig. 1 ebenso wie der im Schnitt entlang der Bohrungsachse 23 kurvenförmige Zenitbereich 15' der Bolzenbohrung 22 gemäß Fig. 2 mit großer Kraft auf den oberen Bereich des Kolbenbolzens gepresst werden, ergibt sich in den Bereichen 15 und 15' eine plastische Verformung des Kolbenwerkstoffes, sodass sich hier der Kolbenbolzen und die Bolzenbohrung 3, 22 formmäßig aneinander anpassen. Da der Kontaktbereich 15 bei der Ausführung der Bolzenbohrung gemäß Fig. 1 eher punktförmig ausgebildet ist, ergibt sich hier eine sehr große Flächenpressung des Zenits 4 der Bolzenbohrung 3 auf den Kolbenbolzen. Da die Bolzenbohrung 22 gemäß Fig. 2 im mittleren Bereich 15' kurvenförmig oder in Form eines Polygonzuges ausgebildet ist, vergrößert sich dadurch die im verformten Bereich 15' sich ergebende Kontaktfläche, wodurch auch die Flächenpressung des Bereiches 15' der Bolzennabe 21 und des Kolbenbolzens abnimmt, was eine Verringerung der Gefahr einer Beschädigung der Bolzennabe 21 im mittleren Bereich 15' mit sich bringt.

### Bezugszeichenliste

- 1: Bolzennabe
- 2: Kolben
- 3: Bolzenbohrung
- 4, 4': Zenit der Bolzenbohrung
- 5: radial außen liegender Bereich der Bolzenbohrung
- 6: radial innen liegender Bereich der Bolzenbohrung
- 7: Bohrungsmitte
- 8, 8': Nadir der Bolzenbohrung 3
- 9: radial außen liegender Bereich des Nadirs der Bolzenbohrung 3
- 10: radial innen liegender Bereich des Nadirs der Bolzenbohrung 3
- 11: radial äußere Stirnfläche der Bolzennabe 1
- 12: radial innere Stirnfläche der Bolzennabe 1
- 13: Draufsicht auf die radial äußere Stirnfläche der Bolzennabe 1
- 14: radial außen liegende Kante des Zenits der Bolzenbohrung 3
- 15, 15': mittlerer Bereich des Zenits der Bolzenbohrung 3
- 16: radial innen liegende Kante des Nadirs der Bolzenbohrung 3
- 17, 17': Kolbenbolzen nach Verformung beim Explosionstakt
- 18, 18': Kolbenbolzen nach Verformung bei Zugbelastung
- 19, 19': unbelasteter Kolbenbolzen
- 20: radial innen liegende Kante des Zenits der Bolzenbohrung 3
- 21: Bolzennabe
- 22: Bolzenbohrung
- 23: Bohrungsachse

## Patentansprüche

1. Bolzennaben (1, 21) eines Kolbens (2) für einen Verbrennungsmotor mit je einer Bolzenbohrung (3, 22) zum Lagern eines kreiszylindrisch ausgebildeten Kolbenbolzens (17, 18, 19), die im Bereich (15, 15') der Bohrungsmitte (7) eine Ovalität aufweist, wobei die Ovalität der Bolzenbohrung (3, 22) von der Bohrungsmitte (7) ausgehend nach radial außen und nach radial innen zunimmt,
**dadurch gekennzeichnet, dass** die Bolzenbohrung (3, 22) im Bereich (15, 15') der Bohrungsmitte (7) eine zenitseitige Längsovalität in Richtung der Kolbenachse aufweist, dass die zenitseitige Längsovalität in Richtung der Kolbenachse der Bolzenbohrung (3, 22) von der Bohrungsmitte (7) ausgehend nach radial außen und nach radial innen und die nadirseitige Längsovalität in Richtung der Kolbenachse der Bolzenbohrung (3, 22) von der Bohrungsmitte (7) ausgehend nach radial innen zunehmen, und dass der Nadir (8) der Bolzenbohrung (3) einen radial außen liegenden Bereich (9) aufweist, der im Schnitt quer zur Bolzenbohrung (3) halbkreisförmig ausgebildet ist.

2. Bolzennaben (1) nach Anspruch 1, **dadurch gekennzeichnet, dass** die zenitseitige Ovalität der Bolzenbohrung (3) von der Bohrungsmitte (7) ausgehend nach radial außen und nach radial innen und die nadirseitige Ovalität nach radial innen linear zunehmen.

3. Bolzennaben (21) nach Anspruch 1, **dadurch gekennzeichnet, dass** der Zenit (4') und der Nadir (8') der Bolzenbohrung (22) im Schnitt entlang der Bohrungsachse (23) betrachtet kurvenförmig ausgebildet sind.

4. Bolzennaben (21) nach Anspruch 1, **dadurch gekennzeichnet, dass** der Zenit (4') und der Nadir (8') der Bolzenbohrung (22) im Schnitt entlang der Bohrungsachse (23) betrachtet die Form eines Polygonzuges aufweisen.

5. Bolzennaben (1, 21) nach einem der Ansprüche 1 bis 4, **dadurch gekennzeichnet, dass** die zenitseitigen Ovalitäten und die nadirseitige Ovalität unterschiedlich stark zunehmen.

## Claims

1. Pln boss (1, 21) for an internal combustion engine piston (2) with one pin bore (3, 22) each to house a circular, cylindrical gudgeon pin (17, 18, 19) of ovular shape in the area (15, 15') of the centre bore (7), whereby the radius of this pin bore ovality (3, 22) increases outward and inward from centre bore (7), **characterised by** a zenith-side longitudinal ovality of the pin bore (3, 22) In the area (15, 15') of centre bore (7) toward the piston, the radius of the zenith-side longitudinal ovality of the pin bore (3, 22) toward the piston increasing outward with the radius of the nadir-side Increasing Inward from centre bore (7), and the nadir (80) of the pin bore (3) having a radially outward lying area (9) of semi-circular shape perpendicular to the pin bore (3).

2. Pin boss (1) as In claim 1, **characterised in that** the zenith-side pin bore ovality (3) increases from centre bore (7) radially outward and inward, and the radius of the nadir-side ovality linearly increases inward.

3. Pin boss (21) as In claim 1, **characterised in that** the zenith (4') and the nadir (8') of the pin bore (22) are curved parallel the bore axis (23).

4. Pin boss (21) as in claim 1, **characterised in that** the zenith (4') and the nadir it (8') of the pin bore (22) form a polygonal line parallel to the bore axis (23).

5. Pin boss (1, 21) as in claims 1 through 4, **characterised in that** the zenith-side and nadir-side ovalities increase at different magnitudes.

## Revendications

1. Moyeux à goupille (1, 21) d'un piston (2) de moteur à combustion interne, pourvus chacun d'un alésage (3, 22) de goupille destiné à recevoir un pied (17, 18, 19) de bielle cylindrique, circulaire et ovalisé dans la région (15, 15') du milieu (7) de l'alésage, l'ovalisation de l'alésage (3, 22) s'accentuant radialement vers l'extérieur et vers l'intérieur à partir du milieu (7) de l'alésage, **caractérisés par le fait que** l'alésage (3, 22) de goupille présente, dans la région (15, 15') du milieu (7) de l'alésage, en partie haute une ovalisation longitudinale dans la direction de l'axe du piston, **par le fait que**, à partir du milieu (7) de l'alésage, cette ovalisation longitudinale en partie haute s'accentue radialement vers l'extérieur et vers l'intérieur dans la direction de l'axe de piston de l'alésage (3, 22) de goupille, **par le fait que**, à partir du milieu (7) de l'alésage, l'ovalisation longitudinale en partie basse s'accentue radialement vers l'intérieur dans la direction de l'axe de piston de l'alésage (3, 22) de goupille et **par le fait que** la partie basse (80) de alésage (3) de goupille présente une région (9) radialement située à l'extérieur et dont la coupe transversale par rapport à l'alésage (3) de goupille est de forme semi-circulaire.

2. Moyeu à goupille (1) selon la revendication 1, **caractérisé par le fait que**, à partir du milieu (7) de l'alésage, l'ovalisation en partie haute de l'alésage (3) de goupille s'accentue radialement vers l'extérieur et vers l'intérieur et que l'ovalisation en partie basse s'accentue radialement vers l'intérieur.

3. Moyeu à goupille (21) selon la revendication 1, **caractérisé par le fait que** la coupe longitudinale par rapport à l'axe (23) de l'alésage de la partie basse (4') et de la partie haute (8') de l'alésage (22) de goupille est de forme courbe.

4. Moyeu à goupille (21) selon la revendication 1, **caractérisé par le fait que** la coupe longitudinale par rapport à l'axe (23) de l'alésage de la partie basse (4') et de la partie haute (8') de l'alésage (22) de goupille est de forme polygonale.

5. Moyeu à goupille (1, 21) selon la revendication 1, **caractérisé par le fait que** les ovalisations en partie haute et l'ovalisation en partie basse n'ont pas le même degré d'accentuation.
